# EUROPEAN PATENT APPLICATION

(11) **EP 4 167 194 A1**
(43) Date of publication of application: **19.04.2023**
(21) Application number: 22189366.2
(22) Date of filing: 09.08.2022
(51) Int. Cl.: G06V 10/82

(54) **KEY POINT DETECTION METHOD AND APPARATUS, MODEL TRAINING METHOD AND APPARATUS, DEVICE AND STORAGE MEDIUM**

(30) Priority: 14.10.2021 CN 202111196690
(71) Applicant: BEIJING BAIDU NETCOM SCIENCE AND TECHNOLOGY CO. LTD., 100085 Beijing (CN)
(72) Inventor: YANG, Qiansheng, Beijing, 100085 (CN)
(74) Representative: dompatent von Kreisler Selting Werner - Partnerschaft von Patent- und Rechtsanwälten mbB

(57) **Abstract**

The present disclosure provides a key point detection method and apparatus, a model training method and apparatus, a device and a storage medium, and relates to the field of artificial intelligence, and particularly to computer vision technologies and deep learning technologies, and may be particularly used for scenarios, such as behavior recognition, human-body special effect generation, entertainment game interaction, or the like. The key point detection method includes: extracting features of an image to obtain image features of the image; acquiring graph information of key points of a target in the image based on the image features, the graph information including a location relationship graph of the key points and location information of a central point in the key points; and acquiring location information of non-central points in the key points based on the location relationship graph of the key points and the location information of the central point. The present disclosure may improve key point detection precision.

## Description

### Field of the Disclosure

The present disclosure relates to the field of artificial intelligence, and particularly to computer vision technologies and deep learning technologies, and may be particularly used for scenarios, such as behavior recognition, human-body special effect generation, entertainment game interaction, or the like, and particularly relates to a key point detection method and apparatus, a model training method and apparatus, a device and a storage medium.

### Background of the Disclosure

With progress of society and a development of science and technology, industries, such as short videos, live streaming, online education, or the like, rise continuously, and in various interaction scenarios, there exist more and more demands for a function of interaction based on human-body key point information.

In a related art, generally, human-body 3D (three-dimensional) key point detection is performed by means of a heat map or regression coordinates.

### Summary of the Disclosure

The present disclosure provides a key point detection method and apparatus, a model training method and apparatus, a device and a storage medium.

According to one aspect of the present disclosure, there is provided a key point detection method, including: extracting features of an image to obtain image features of the image; acquiring graph information of key points of a target in the image based on the image features, the graph information including a location relationship graph of the key points and location information of a central point in the key points; and acquiring location information of non-central points in the key points based on the location relationship graph of the key points and the location information of the central point.

According to another aspect of the present disclosure, there is provided a method for training a key point detection model, including: extracting features of an image sample to obtain image features of the image sample; acquiring prediction graph information of key points of a target in the image sample based on the image features, the prediction graph information including a prediction location relationship graph of the key points and prediction location information of a central point in the key points; constructing a total loss function based on the prediction location relationship graph and the prediction location information; and training the key point detection model based on the total loss function.

According to another aspect of the present disclosure, there is provided a key point detection apparatus, including: a feature extracting module configured to extract features of an image to obtain image features of the image; a graph information extracting module configured to acquire graph information of key points of a target in the image based on the image features, the graph information including a location relationship graph of the key points and location information of a central point in the key points; and a determining module configured to acquire location information of non-central points in the key points based on the location relationship graph of the key points and the location information of the central point.

According to another aspect of the present disclosure, there is provided an apparatus for training a key-point-graph-information extraction model, including: a feature extracting module configured to extract features of an image sample to obtain image features of the image sample; a graph information extracting module configured to acquire prediction graph information of key points of a target in the image sample based on the image features, the prediction graph information including a prediction location relationship graph of the key points and prediction location information of a central point in the key points; a constructing module configured to construct a total loss function based on the prediction location relationship graph and the prediction location information; and a training module configured to train a key point detection model based on the total loss function.

According to another aspect of the present disclosure, there is provided an electronic device, including: at least one processor; and a memory connected with the at least one processor communicatively, wherein the memory stores instructions executable by the at least one processor to enable the at least one processor to perform the method according to any one of the above-mentioned aspects.

According to another aspect of the present disclosure, there is provided a non-transitory computer readable storage medium with computer instructions stored thereon, wherein the computer instructions are used for causing a computer to perform the method according to any one of the above-mentioned aspects.

According to another aspect of the present disclosure, there is provided a computer program product including a computer program which, when executed by a processor, implements the method according to any one of the above-mentioned aspects.

The technical solution according to the present disclosure can improve key point detection precision.

It should be understood that the statements in this section are not intended to identify key or critical features of the embodiments of the present disclosure, nor limit the scope of the present disclosure. Other features of the present disclosure will become apparent from the following description.

### Brief Description of Drawings

The drawings are used for better understanding the present solution and do not constitute a limitation of the present disclosure. In the drawings,
Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure;
Fig. 4 is a schematic diagram according to a fourth embodiment of the present disclosure;
Fig. 5 is a schematic diagram according to a fifth embodiment of the present disclosure;
Fig. 6 is a schematic diagram according to a sixth embodiment of the present disclosure;
Fig. 7 is a schematic diagram according to a seventh embodiment of the present disclosure;
Fig. 8 is a schematic diagram according to an eighth embodiment of the present disclosure;
Fig. 9 is a schematic diagram according to a ninth embodiment of the present disclosure;
Fig. 10 is a schematic diagram according to a tenth embodiment of the present disclosure;
Fig. 11 is a schematic diagram according to an eleventh embodiment of the present disclosure; and
Fig. 12 is a schematic diagram of an electronic device configured to implement any of methods for training a key point detection or key-point-graph-information extraction model according to the embodiments of the present disclosure.

### Detailed Description of Preferred Embodiments

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

In a related art, generally, human-body 3D key point detection is performed by means of a heat map or regression coordinates. However, this positioning method has insufficient precision.

In order to improve precision of key point detection, the present disclosure provides the following embodiments.

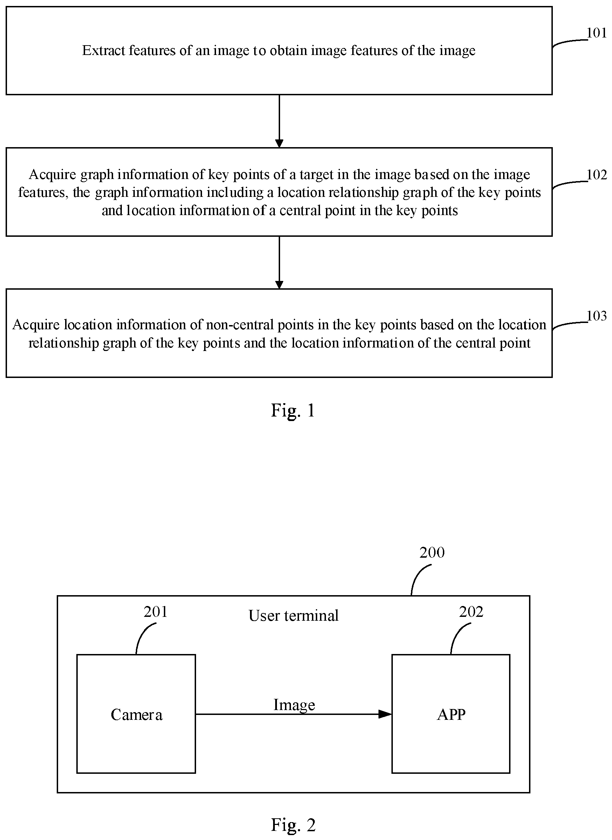

Fig. 1 is a schematic diagram according to a first embodiment of the present disclosure, and the present embodiment provides a key point detection method, including:
101: extracting features of an image to obtain image features of the image.
102: acquiring graph information of key points of a target in the image based on the image features, the graph information including a location relationship graph of the key points and location information of a central point in the key points.
103: acquiring location information of non-central points in the key points based on the location relationship graph of the key points and the location information of the central point.

An execution subject of the present embodiment may be called a key point detection apparatus, and the key point detection apparatus may be software, hardware, or a combination of software and hardware, and may be located in an electronic device. The electronic device may be located at a server or a user terminal, the server may be a local server or a cloud, and the user terminal may include a mobile device (such as a mobile phone and a tablet computer), a vehicle-mounted terminal (such as an in-vehicle infotainment system), a wearable device (such as a smart watch and a smart bracelet), a smart home device (such as a smart television and a smart speaker), or the like.

Key point detection may be applied to various scenarios, such as behavior recognition, human-body special effect generation, entertainment game interaction, or the like.

Taking execution by the user terminal as an example, as shown in Fig. 2, a human-body image may be collected using a camera 201 on the user terminal 200 (such as a mobile phone), and transmitted to an APP 202 on the user terminal requiring human-body interaction, and the APP may locally identify 3D key points of a human body at the user terminal. Certainly, it may be understood that the APP may also send the human-body image to the cloud, and the 3D key points are positioned by the cloud.

The image is an image containing a target, and the target refers to an object with key points to be detected, such as a human face, a hand, a human body, an animal, or the like. For example, the target is a human body, and specifically, the image may be a human-body image.

After the image is acquired, various related feature extraction networks may be used to extract the image features of the image. The feature extraction network is, for example, a deep convolutional neural network (DCNN), and a backbone network thereof is, for example, Hourglass.

Different to-be-detected key points may be set based on different targets. For example, for the human body, the key point may be a 3D key point specifically, and the 3D key point means that location information of the key point is three-dimensional spatial information, and may be generally represented by two-dimensional (x, y) and depth information.

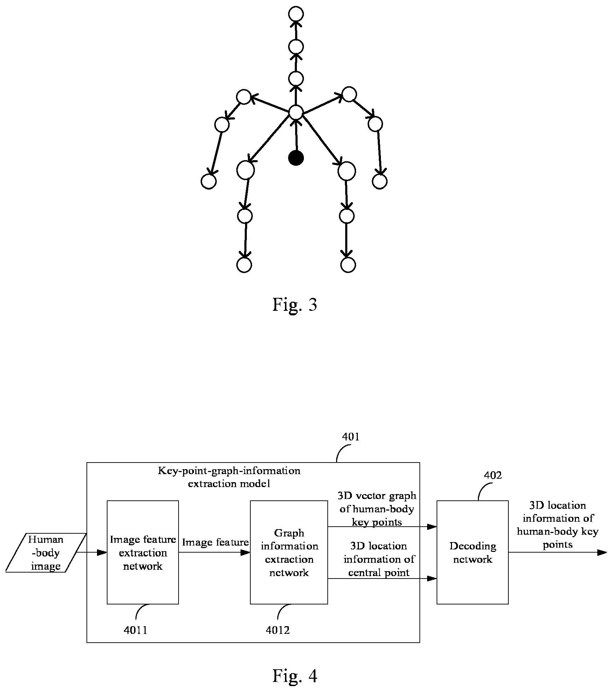

As shown in Fig. 3, 17 key points are included: the top of the head, the nose, the pharynx, the left and right shoulders, the left and right elbows, the left and right hands, the stomach, the lower abdomen, the left and right hips, the left and right knees, and the left and right feet.

The key points may be divided into a central point and non-central points, and the central point is one of the key points, and may be set; for example, the key point of the lower abdomen is set as the central point, and the other key points are the non-central points. For example, referring to Fig. 3, the central point is represented by a black dot, and the non-central points are represented by white dots.

The location relationship graph is used to indicate a location relationship between the key points, and further, when the key points are 3D key points, the location relationship graph is a 3D location relationship graph, or is called a 3D structure graph, a 3D vector graph, or the like.

The location relationship graph includes nodes and edges, the nodes are the key points, and the edges are connecting lines with directions between the nodes. For example, Fig. 3 is a location relationship graph of key points of a human body, the included nodes are the key points, and the edges between the nodes are represented by directional arrows.

When the key point is a 3D key point, the location information of the central point is 3D location information of the central point, which specifically includes: a 2D (two-dimensional) heat map of the central point and depth information of the central point.

The heat map may also be referred to as a thermodynamic map, a Gaussian heat map, or the like, and the central point corresponds to a point in the heat map.

The 2D heat map means that the point in the heat map corresponding to the central point is 2D, and 2D coordinates (x, y) of the point may be used as 2D location information of the central point.

Assuming that coordinates in a three-dimensional space are represented as (x, y, z), and generally, the depth information is a value between 1 and 4000, and may be converted into a specific z-direction numerical value of the three-dimensional space by internal parameters of a camera.

Therefore, based on the 2D heat map and the depth information of the central point, the 3D location information (x, y, z) of the central point may be obtained.

After the 3D location information of the central point and the 3D location relationship graph of the key points are obtained, a decoding operation may be performed node by node to obtain the 3D location information of each key point.

After 3D coordinates of the central point are determined to be (x0, y0, z0) based on the 2D heat map and the depth information of the central point, assuming that the location relationship graph may include information of a directional edge, for example, in Fig. 3, 3D coordinates of the directional edge between the black dot (central node) and the white dot connected therewith are represented as (Δ*x,* Δ*y*, Δ*z*), 3D coordinates of the white dot connected with the black dot are (*x*0 + Δ*x*, *y*0 + Δ*y*, *z*0 + Δ*z*). The remaining nodes have similar decoding processes.

Therefore, the location information of the central point may be obtained based on the image features, and the location information of the non-central points may be obtained based on the location information of the central point and the location relationship graph, thereby obtaining the location information of all the key points.

Taking human-body key point detection as an example, 3D location information of human-body key points may be detected using a deep neural network.

A location relationship graph of the human-body key points may be referred to as a 3D vector graph of the human-body key points, location information of a central point may be 3D location information of the central point specifically, a network for extracting the 3D vector graph and the 3D location information of the central point may be referred to as a key-point-graph-information extraction model (or network), and a network for obtaining the 3D location information of the human-body key points based on the 3D vector graph and the 3D location information of the central point may be referred to as a decoding network.

As shown in Fig. 4, after the human-body image is input into the key-point-graph-information extraction model 401, the key-point-graph-information extraction model 401 may process the human-body image to obtain the 3D vector graph of the human-body key points and the 3D location information of the central point in the key points, and then, the decoding network 402 may decode the input 3D vector graph and the input 3D location information of the central point node by node to obtain 3D location information of the non-central points, and since the 3D location information of the central point is obtained previously, the 3D location information of all the key points is obtained.

Further, the key-point-graph-information extraction model may include: an image feature extraction network 4011 and a graph information extraction network 4012.

The image feature extraction network 4011 extracts image features of the input human-body image to obtain the image features. The image feature extraction network may be a DCNN, and a specific backbone network is, for example, Hourglass.

The graph information extraction network 4012 processes the input image features to obtain the 3D vector graph of the human-body key points and the 3D location information of the central point.

In the embodiment of the present disclosure, the location information of the central point and the location relationship graph may be obtained based on the image features, and the location information of the non-central points may be obtained based on the location information of the central point and the location relationship graph; that is, the key points may be positioned by referring to the location relationship graph, thereby improving detection precision of the key points.

In some embodiments, the acquiring graph information of key points of a target in the image based on the image features includes: enhancing the image features based on a number of location channels of the key points of the target to obtain graph convolution enhancement features; and obtaining the graph information based on the graph convolution enhancement features.

As shown in Fig. 4, a network for acquiring the graph information of the key points based on the image features may be referred to as the graph information extraction network.

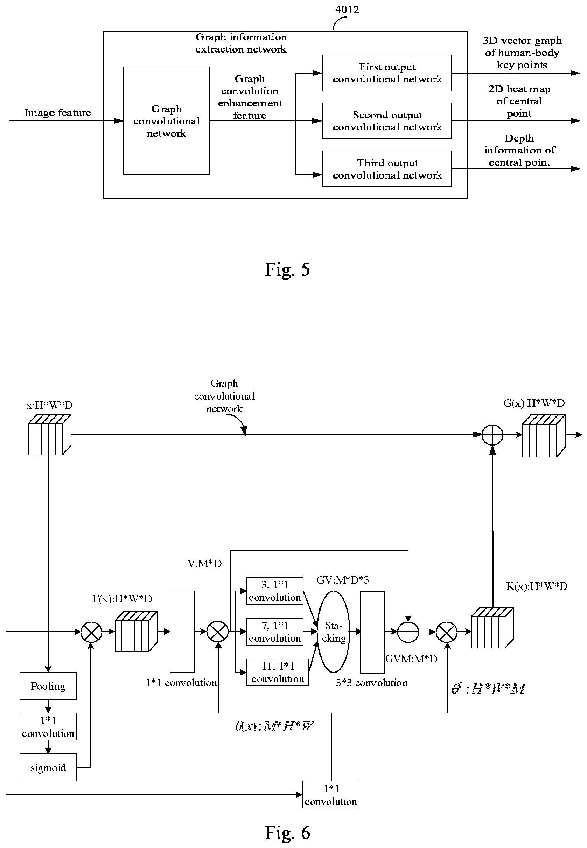

Further, as shown in Fig. 5, the graph information extraction network may include: a graph convolutional network and an output network.

The image features and the graph convolution enhancement features serve as input and output of the graph convolutional network. That is, the graph convolutional network may enhance the image features based on graph features of the key points of the target to obtain the graph convolution enhancement features.

The graph convolution enhancement features are features obtained after the image features are enhanced, location features of the key points are considered during enhancement, a convolution method may be used, and therefore, the features may be called the graph convolution enhancement features; it may be understood that the graph convolution enhancement feature may also be named other names. The location features of the key points are obtained by projecting the image features onto the location channels, and for a specific acquiring method, reference may be made to the following description.

Input and output of the output network are the graph convolution enhancement features and the graph information. That is, the output network may obtain the graph information based on the graph convolution enhancement features.

Each type of graph information may correspond to one output network.

Further, the 3D location information of the central point may include the 2D heat map and the depth information of the central point, and therefore, 3 output networks may be provided and configured to output the 3D vector graph of the human-body key points, the 2D heat map of the central point and the depth information of the central point respectively.

In Fig. 5, the three output networks may be all convolutional neural networks (CNNs), which are represented as a first output convolutional network, a second output convolutional network, and a third output convolutional network respectively.

The graph convolution enhancement features are obtained based on the number of the location channels of the key points of the target, and then, the graph information of the key points is obtained based on the graph convolution enhancement features, such that the location features of the key points may be introduced into the image features, thereby obtaining the graph information, such as the location relationship graph of the key points and the location information of the central point.

In some embodiments, the enhancing the image features based on a number of location channels of the key points to obtain graph convolution enhancement features includes: weighting the image features to obtain weighted image features; determining a projection matrix from an image channel domain of the image features to a location channel domain of the key points based on the number of the location channels of the key points; based on the projection matrix, projecting the weighted image features to the location channel domain to obtain aggregation features of the location channels of the key points; obtaining location features of the location channels of the key points based on the aggregation features; based on a transpose matrix of the projection matrix, back projecting the location features to the image channel domain to obtain fusion features; and obtaining the graph convolution enhancement features based on the image features and the fusion features.

The graph convolutional network may be shown in Fig. 6. In Fig. 6, the image feature is represented by x and has a dimension of H^{∗}W^{∗}D, wherein H represents a height, W represents a width, and D represents the number of the channels.

As shown in Fig. 6, the weighted image feature is represented by F(x), and a dimension of F(x) is identical to the dimension of x, i.e., H^{∗}W^{∗}D.

F(x) is obtained by weighting each channel corresponding to x; for example, if x has D channels in total, H^{∗}W pixel values on a first channel may be weighted using a weight coefficient corresponding to the first channel; H^{∗}W pixel values on a second channel are weighted using a weight coefficient corresponding to the second channel; the rest can be done in the same manner. Different channels may have same or different weight coefficients.

In some embodiments, the image features are image features of plural channels, and the weighting the image features to obtain weighted image features includes: performing pooling, a one-dimensional convolution and activation on image features of each of the plural channels to determine the weight coefficient of each channel; and weighting the image features of each channel based on the weight coefficient of each channel to obtain the weighted image features.

Specifically, as shown in Fig. 6, each channel corresponding to the image features may be subjected to pooling (for example, avg pooling), a 1^{∗}1 convolution and activation (such as sigmoid activation) to obtain the weight coefficient on each channel; that is, the dimension of the weight coefficient may be 1^{∗}1^{∗}D.

By performing the pooling, one-dimensional convolution and activation on the image features, the weight coefficient of the image features of each channel may be obtained, and then, the weighted image features may be obtained based on the weight coefficient.

In Fig. 6, a number of image channels is represented by D, the number of the location channels of the key points is represented by M, and both M and D are set values; generally, a numerical value of D is large, and M may be selected as a product of a number of the key points and a dimension of location coordinates; for example, if the number of the key points is 17, and the key point is a 3D key point, M=17^{∗}3=51.

A spatial domain where the image channels are located may be referred to as the image channel domain, a spatial domain where the location channels are located may be referred to as the location channel domain, and in Fig. 6, the projection matrix from the image channel domain to the location channel domain is represented by *θ*(*x*), and a dimension of *θ*(*x*) is M^{∗}H^{∗}W.

Specifically, the image features x may be convolved using M 1^{∗}1 convolution kernels to obtain the projection matrix *θ*(*x*).

After obtained, the weighted image features F(x) and the projection matrix *θ*(*x*) may be multiplied to project the weighted image features to the location channel domain. Further, before multiplication, the weighted image features F(x) may also be convolved using a 1^{∗}1 convolution kernel, and a dimension of the processed weighted image features is also H^{∗}W^{∗}D.

The features projected into the location channel domain may be referred to as the aggregation features of the location channels of the key points, and represented by V with a dimension of M^{∗}D.

The aggregation features may be analyzed after obtained to obtain the location features of each location channel, the location features are related to the location information of the key points, and then, the location information of the key points may be obtained based on the location features.

In some embodiments, the obtaining location features of the location channels of the key points based on the aggregation features includes: performing a one-dimensional convolution of multiple scales on the aggregation features to obtain features of multiple scales; stacking the features of the multiple scales to obtain stacked features; performing a multidimensional convolution on the stacked features to obtain convolved features, a dimension of the multidimensional convolution being the same as a number of the multiple scales; and obtaining the location features based on the aggregation features and the convolved features.

As shown in Fig. 6, there exist three one-dimensional convolutions of the multiple scales; that is, the aggregation features V may be processed using three 1^{∗}1 convolution kernels, parameters of the three convolution kernels are 3, 7, and 11 respectively, and a dimension of the feature of each scale after each one-dimensional convolution is M^{∗}D.

Stacking means that features of multiple scales are combined together; for example, features of three scales are combined into a feature with a dimension of M^{∗}D^{∗}3.

Then, a 3^{∗}3 convolution may be used to obtain the location features.

In Fig. 6, the location features of the location channels of the key points are represented by GVM with a dimension M^{∗}D.

The aggregation features are subjected to the multi-scale convolution to obtain richer information, thereby improving precision of key point detection.

The transpose matrix of the projection matrix is represented by *θ^{t}* which has a dimension of H^{∗}W^{∗}D.

Back projection means that the location features GVM are multiplied by the transpose matrix of the projection matrix, so as to obtain the fusion features which are represented by K(x) and have a dimension of H^{∗}W^{∗}D.

After the fusion features K(x) are obtained, the original image features x and the fusion features K(x) may be added to obtain the graph convolution enhancement features G(x) which have a dimension of H^{∗}W^{∗}D.

With the above weighting, convolution, projection, back projection and other processing operations, the graph convolution enhancement features incorporating the location features of the key points may be obtained, and then, the graph information of the key points may be obtained based on the graph convolution enhancement features.

In some embodiments, the location relationship graph is a 3D location relationship graph, the location information of the central point includes: the 2D heat map and the depth information, and the obtaining the graph information based on the graph convolution enhancement features includes: performing a first convolution on the graph convolution enhancement features to obtain the 3D location relationship graph; performing a second convolution on the graph convolution enhancement features to obtain the 2D heat map of the central point; and performing a third convolution on the graph convolution enhancement features to obtain the depth information of the central point.

As shown in Fig. 5, networks corresponding to the first convolution, the second convolution and the third convolution may be referred to as a first output convolutional network, a second output convolutional network, and a third output convolutional network.

The three networks may all be CNN networks, and may be different specifically.

For example, corresponding to the 3D vector graph, a dimension of a convolution kernel for the first convolution is H^{∗}W^{∗}M, and M=the number of the key points^{∗}a number of coordinates; for example, for 3D detection, if there are 17 key points, M =51, and H and W are the height and width of the image.

Corresponding to the 2D heat map of the central point, a dimension of a convolution kernel for the second convolution is H^{∗}W^{∗}1; that is, one heat map may be detected, i.e., the 2D heat map of the central point.

Corresponding to the depth information of the central point, a dimension of a convolution kernel for the third convolution is H^{∗}W^{∗}1; that is, one piece of depth information may be detected.

The graph information of the key points may be obtained based on the graph convolution enhancement features using the convolution.

In some embodiments, the location relationship graph includes information of directional edges between different key points, and the obtaining location information of non-central points in the key points based on the location relationship graph of the key points and the location information of the central point includes: sequentially decoding the location information of the non-central points with the connection relationship from the location information of the central point based on the information of the directional edge.

For example, after the 3D coordinates of the central point are determined to be (x0, y0, z0) based on the 2D heat map and the depth information of the central point, assuming that the location relationship graph may include information of a directional edge, for example, in Fig. 3, the 3D coordinates of the directional edge between the black dot (central node) and the white dot connected therewith are represented as (Δ*x,* Δ*y*, Δ*z*), the 3D coordinates of the white dot connected with the black dot are (*x*0 + Δ*x*, *y*0 + Δ*y*, *z*0 + Δ*z*). The remaining nodes have similar decoding processes.

By sequentially decoding the location information of the non-central points from the location information of the central point, the location information of each key point may be obtained.

For example, in the above description, the depth information of the central point is obtained based on the graph convolution enhancement features, it may be understood that the graph information may include the location relationship graph and the 2D heat map of the central point, and the depth information of the central point may be obtained based on a hardware device used by a user; for example, the user uses an apparatus having a depth sensing apparatus, and the depth information of the central point may be obtained based on the apparatus, such that subsequent processing operations may be performed based on the depth information of the central point. Or, the depth information of all the key points may be acquired based on the apparatus, and the 2D heat map is only required to be constructed in the above processing process.

In the embodiment of the present disclosure, for 3D key point detection of the human-body image, the graph information of the key points is obtained, and 3D key point detection is performed based on the graph information, thus solving a problem of poor precision caused only according to a heat map or a regression method, and improving the precision of 3D key point detection.

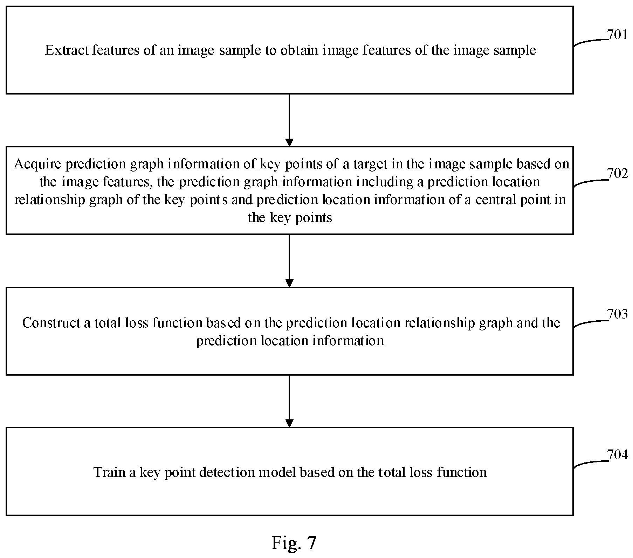

Fig. 7 is a schematic diagram according to a seventh embodiment of the present disclosure, and the present embodiment provides a method for training a key-point-graph-information extraction model, including:
701: extracting features of an image sample to obtain image features of the image sample.
702: acquiring prediction graph information of key points of a target in the image sample based on the image features, the prediction graph information including a prediction location relationship graph of the key points and prediction location information of a central point in the key points.
703: constructing a total loss function based on the prediction location relationship graph and the prediction location information.
704: training a key point detection model based on the total loss function.

An image used in a training stage may be referred to as the image sample, and the image sample may be acquired from an existing training set.

When the image sample is acquired, the target in the image sample may be further labeled manually or subjected to other processing operations, such that a true value of the target in the image sample is obtained, and the true value is a true result of the target.

During 3D key point detection, the true value may include:
a real 3D location relationship graph of the target, a real 2D heat map of the central point, and real depth information of the central point.

The real depth information of the central point is a specific value, and may be labeled manually, and generally, the value is a value between 1 and 4000.

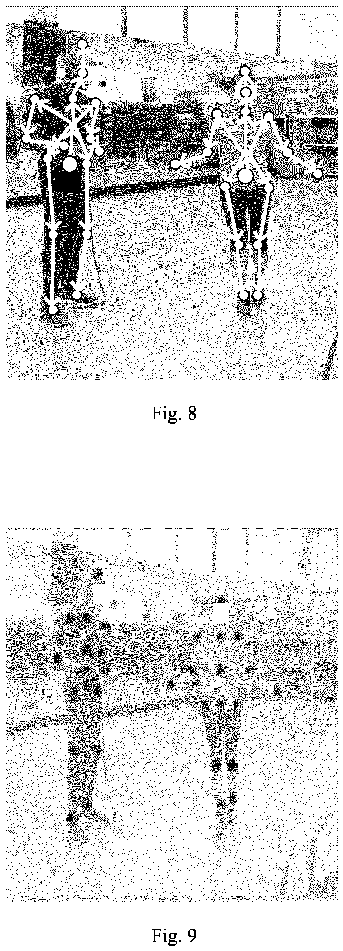

For example, the target is a human body, and the real 3D location relationship graph may be shown in Fig. 8 corresponding to two human bodies.

The real 2D heat map of the central point may be obtained based on a real 2D heat map, the real 2D heat map may be labeled manually or in other ways, and the 2D heat map indicates that a 2D location is labeled corresponding to each key point; for example, referring to Fig. 9 which is a 2D heat map corresponding to a human body, each black dot corresponds to one key point.

Therefore, the real 3D location relationship graph and the real 2D heat map and the real depth information of the central point may be obtained.

This information of the training stage may be referred to as prediction graph information corresponding to the graph information of an application stage.

In some embodiments, the prediction location relationship graph is a prediction 3D location relationship graph, and the prediction location information includes: a prediction 2D heat map and prediction depth information; the constructing a total loss function based on the prediction location relationship graph and the prediction location information includes: constructing a first loss function based on the prediction 3D location relationship graph and the real 3D location relationship graph of the target; constructing a second loss function based on the prediction 2D heat map and the real 2D heat map of the central point; constructing a third loss function based on the prediction depth information and the real depth information of the central point; and constructing the total loss function based on the first loss function, the second loss function and the third loss function.

Specific formulas of the first loss function, the second loss function and the third loss function are not limited, and may be, for example, an L1 loss function, an L2 loss function, a cross entropy loss function, or the like.

After the total loss function is constructed, the training based on the total loss function may include: adjusting model parameters based on the total loss function until an end condition is met, the end condition including a preset iteration number or loss function convergence; and taking the model when the end condition is met as a final model.

A deep neural network included in the key-point-graph-information extraction model may specifically include: an image feature extraction network and a graph information extraction network, and the graph information extraction network may include: a graph convolutional network and an output convolutional network, and therefore, parameters of the networks involved in the above may be adjusted specifically when the model parameters are adjusted.

It may be understood that corresponding processes of the model training stage (the embodiment corresponding to Fig. 7) and the model application stage (the embodiment corresponding to Fig. 1) have consistent principles which are not described in detail in the present embodiment, and for the details, reference may be made to the description of the above application stage.

In the embodiment of the present disclosure, the prediction graph information is obtained, and the total loss function is constructed based on the prediction graph information, such that the graph information of the key points may be referred to during model training, thus improving precision of the key-point-graph-information extraction model, and then improving the precision of key point detection.

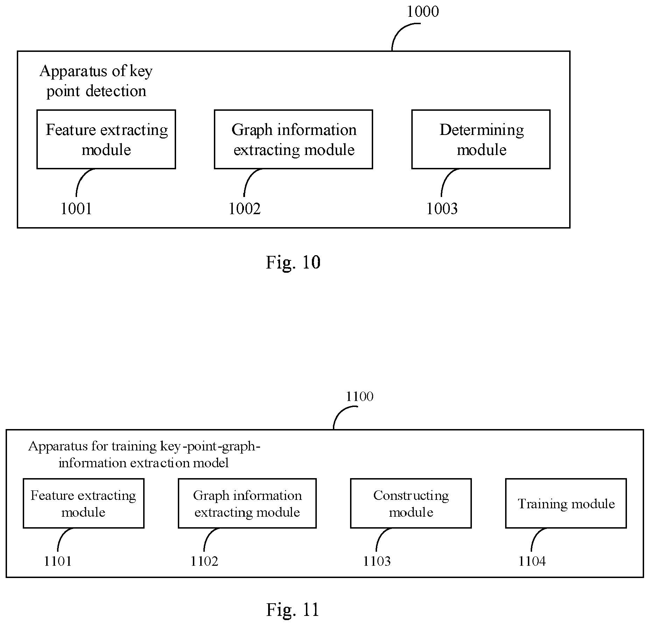

Fig. 10 is a schematic diagram according to a tenth embodiment of the present disclosure, the present embodiment provides a key point detection apparatus, and the apparatus 1000 includes a feature extracting module 1001, a graph information extracting module 1002 and a determining module 1003.

The feature extracting module 1001 is configured to extract features of an image to obtain image features of the image; the graph information extracting module 1002 is configured to acquire graph information of key points of a target in the image based on the image features, the graph information including a location relationship graph of the key points and location information of a central point in the key points; and the determining module 1003 is configured to acquire location information of non-central points in the key points based on the location relationship graph of the key points and the location information of the central point.

In some embodiments, the graph information extracting module 1002 includes: an enhancing unit configured to enhance the image features based on a number of location channels of the key points to obtain graph convolution enhancement features; and an acquiring unit configured to obtain the graph information based on the graph convolution enhancement features.

In some embodiments, the enhancing unit is specifically configured to: weight the image features to obtain weighted image features; determine a projection matrix from an image channel domain of the image features to a location channel domain of the key points based on the number of the location channels of the key points; based on the projection matrix, project the weighted image features to the location channel domain to obtain aggregation features of the location channels of the key points; obtain location features of the location channels of the key points based on the aggregation features; based on a transpose matrix of the projection matrix, back project the location features to the image channel domain to obtain fusion features; and obtain the graph convolution enhancement features based on the image features and the fusion features.

In some embodiments, the image features are image features of plural channels, and the enhancing unit is further specifically configured to: perform pooling, a one-dimensional convolution and activation on image features of each of the plural channels to determine the weight coefficient of each channel; and weight the image features of each channel based on the weight coefficient of each channel to obtain the weighted image features.

In some embodiments, the enhancing unit is further specifically configured to: perform a one-dimensional convolution of multiple scales on the aggregation features to obtain features of multiple scales; stack the features of the multiple scales to obtain stacked features; perform a multidimensional convolution on the stacked features to obtain convolved features, a dimension of the multidimensional convolution being the same as a number of the multiple scales; and obtain the location features based on the aggregation features and the convolved features.

In some embodiments, the location relationship graph is a 3D location relationship graph, the location information of the central point includes: the 2D heat map and the depth information, and the acquiring unit is specifically configured to: perform a first convolution on the graph convolution enhancement features to obtain the 3D location relationship graph; perform a second convolution on the graph convolution enhancement features to obtain the 2D heat map of the central point; and perform a third convolution on the graph convolution enhancement features to obtain the depth information of the central point.

In some embodiments, the location relationship graph includes information of directional edges between different key points, and the determining module 1003 is specifically configured to: sequentially decode the location information of the non-central points with the connection relationship from the location information of the central point based on the information of the directional edge.

In the embodiment of the present disclosure, by obtaining a key point detection result based on detection results of plural stages, scale information may be referred to in a target result, distance information may be referred to by considering a position code when the detection results of the plural stages are obtained, and therefore, the scale information and the distance information are referred to in the key point detection result, thus improving precision of key point detection.

Fig. 11 is a schematic diagram according to an eleventh embodiment of the present disclosure, the present embodiment provides an apparatus for training a key point detection model, and the apparatus 1100 includes a feature extracting module 1101, a graph information extracting module 1102, a constructing module 1103 and a training module 1104.

The feature extracting module 1101 is configured to extract features of an image sample to obtain image features of the image sample; the graph information extracting module 1102 is configured to acquire prediction graph information of key points of a target in the image sample based on the image features, the prediction graph information including a prediction location relationship graph of the key points and prediction location information of a central point in the key points; the constructing module 1103 is configured to construct a total loss function based on the prediction location relationship graph and the prediction location information; and the training module 1104 is configured to train a key point detection model based on the total loss function.

In some embodiments, the prediction location relationship graph is a prediction 3D location relationship graph, and the prediction location information includes: a prediction 2D heat map and prediction depth information; the constructing module 1103 is specifically configured to: construct a first loss function based on the prediction 3D location relationship graph and the real 3D location relationship graph of the target; construct a second loss function based on the prediction 2D heat map and the real 2D heat map of the central point; construct a third loss function based on the prediction depth information and the real depth information of the central point; and construct the total loss function based on the first loss function, the second loss function and the third loss function.

In some embodiments, the graph information extracting module 1102 includes: an enhancing unit configured to enhance the image features based on a number of location channels of the key points to obtain graph convolution enhancement features; and an acquiring unit configured to obtain the prediction graph information based on the graph convolution enhancement features.

In some embodiments, the enhancing unit is specifically configured to: weight the image features to obtain weighted image features; determine a projection matrix from an image channel domain of the image features to a location channel domain of the key points based on the number of the location channels of the key points; based on the projection matrix, project the weighted image features to the location channel domain to obtain aggregation features of the location channels of the key points; obtain location features of the location channels of the key points based on the aggregation features; based on a transpose matrix of the projection matrix, back project the location features to the image channel domain to obtain fusion features; and obtain the graph convolution enhancement features based on the image features and the fusion features.

In some embodiments, the image features are image features of plural channels, and the enhancing unit is further specifically configured to: perform pooling, a one-dimensional convolution and activation on image features of each of the plural channels to determine the weight coefficient of each channel; and weight the image features of each channel based on the weight coefficient of each channel to obtain the weighted image features.

In some embodiments, the enhancing unit is further specifically configured to: perform a one-dimensional convolution of multiple scales on the aggregation features to obtain features of multiple scales; stack the features of the multiple scales to obtain stacked features; perform a multidimensional convolution on the stacked features to obtain convolved features, a dimension of the multidimensional convolution being the same as a number of the multiple scales; and obtain the location features based on the aggregation features and the convolved features.

In some embodiments, the prediction location relationship graph is a prediction 3D location relationship graph, the prediction location information of the central point includes: the prediction 2D heat map and the prediction depth information, and the acquiring unit is specifically configured to: perform a first convolution on the graph convolution enhancement features to obtain the prediction 3D location relationship graph; perform a second convolution on the graph convolution enhancement features to obtain the prediction 2D heat map of the central point; and perform a third convolution on the graph convolution enhancement features to obtain the prediction depth information of the central point.

In the embodiment of the present disclosure, by constructing the total loss function based on detection results of plural stages, scale information may be referred to in the total loss function, distance information may be referred to by considering a position code when the detection results of the plural stages are obtained, and therefore, the scale information and the distance information are referred to in the total loss function, thus improving precision of the key point detection model.

It may be understood that in the embodiments of the present disclosure, mutual reference may be made to the same or similar contents in different embodiments.

It may be understood that "first", "second", or the like, in the embodiments of the present disclosure are only for distinguishing and do not represent an importance degree, a sequential order, or the like.

In the technical solution of the present disclosure, the collection, storage, usage, processing, transmission, provision, disclosure, or the like, of involved user personal information are in compliance with relevant laws and regulations, and do not violate public order and good customs.

According to the embodiment of the present disclosure, there are also provided an electronic device, a readable storage medium and a computer program product.

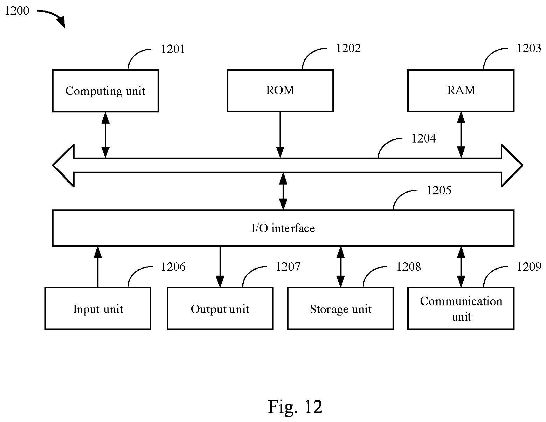

Fig. 12 shows a schematic block diagram of an exemplary electronic device 1200 which may be configured to implement the embodiment of the present disclosure. The electronic device is intended to represent various forms of digital computers, such as laptop computers, desktop computers, workstations, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 12, the electronic device 1200 includes a computing unit 1201 which may perform various appropriate actions and processing operations according to a computer program stored in a read only memory (ROM) 1202 or a computer program loaded from a storage unit 1208 into a random access memory (RAM) 1203. Various programs and data necessary for the operation of the electronic device 1200 may be also stored in the RAM 1203. The computing unit 1201, the ROM 1202, and the RAM 1203 are connected with one other through a bus 1204. An input/output (I/O) interface 1205 is also connected to the bus 1204.

The plural components in the electronic device 1200 are connected to the I/O interface 1205, and include: an input unit 1206, such as a keyboard, a mouse, or the like; an output unit 1207, such as various types of displays, speakers, or the like; the storage unit 1208, such as a magnetic disk, an optical disk, or the like; and a communication unit 1209, such as a network card, a modem, a wireless communication transceiver, or the like. The communication unit 1209 allows the electronic device 1200 to exchange information/data with other devices through a computer network, such as the Internet, and/or various telecommunication networks.

The computing unit 1201 may be a variety of general and/or special purpose processing components with processing and computing capabilities. Some examples of the computing unit 1201 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 1201 performs the methods and processing operations described above, such as the key point detection method or the method for training a key point detection model. For example, in some embodiments, the key point detection method or the method for training a key point detection model may be implemented as a computer software program tangibly contained in a machine readable medium, such as the storage unit 1208. In some embodiments, part or all of the computer program may be loaded and/or installed into the electronic device 1200 via the ROM 1202 and/or the communication unit 1209. When the computer program is loaded into the RAM 1203 and executed by the computing unit 1201, one or more steps of the key point detection method or the method for training a key point detection model described above may be performed. Alternatively, in other embodiments, the computing unit 1201 may be configured to perform the key point detection method or the method for training a key point detection model by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A method of key point detection, comprising:
extracting (101) features of an image to obtain image features of the image;
acquiring (102) graph information of key points of a target in the image based on the image features, the graph information comprising a location relationship graph of the key points and location information of a central point in the key points; and
acquiring (103) location information of non-central points in the key points based on the location relationship graph of the key points and the location information of the central point.

2. The method according to claim 1, wherein the acquiring graph information of key points of a target in the image based on the image features comprises:
enhancing the image features based on a number of location channels of the key points to obtain graph convolution enhancement features; and
obtaining the graph information based on the graph convolution enhancement features.

3. The method according to claim 2, wherein the enhancing the image features based on a number of location channels of the key points to obtain graph convolution enhancement features comprises:
weighting the image features to obtain weighted image features;
determining a projection matrix from an image channel domain of the image features to a location channel domain of the key points based on the number of the location channels of the key points;
based on the projection matrix, projecting the weighted image features to the location channel domain to obtain aggregation features of the location channels of the key points;
obtaining location features of the location channels of the key points based on the aggregation features;
based on a transpose matrix of the projection matrix, back projecting the location features to the image channel domain to obtain fusion features; and
obtaining the graph convolution enhancement features based on the image features and the fusion features.

4. The method according to claim 3, wherein the image features are image features of plural channels, and the weighting the image features to obtain weighted image features comprises:
performing pooling, a one-dimensional convolution and activation on image features of each of the plural channels to determine a weight coefficient of each channel; and
weighting the image features of each channel based on the weight coefficient of each channel to obtain the weighted image features.

5. The method according to claim 3, wherein the obtaining location features of the location channels of the key points based on the aggregation features comprises:
performing a one-dimensional convolution of multiple scales on the aggregation features to obtain features of multiple scales;
stacking the features of the multiple scales to obtain stacked features;
performing a multidimensional convolution on the stacked features to obtain convolved features, a dimension of the multidimensional convolution being the same as a number of the multiple scales; and
obtaining the location features based on the aggregation features and the convolved features.

6. The method according to any one of claims 2 to 5, wherein the location relationship graph is a 3D location relationship graph, the location information of the central point comprises: a 2D heat map and depth information, and the obtaining the graph information based on the graph convolution enhancement features comprises:
performing a first convolution on the graph convolution enhancement features to obtain the 3D location relationship graph;
performing a second convolution on the graph convolution enhancement features to obtain the 2D heat map of the central point; and
performing a third convolution on the graph convolution enhancement features to obtain the depth information of the central point.

7. The method according to any one of claims 1 to 5, wherein the location relationship graph comprises information of directional edges between different key points, and the obtaining location information of non-central points in the key points based on the location relationship graph of the key points and the location information of the central point comprises:
sequentially decoding the location information of the non-central points with the connection relationship from the location information of the central point based on the information of the directional edge.

8. A method for training a key-point-graph-information extraction model, comprising:
Extracting (701) features of an image sample to obtain image features of the image sample;
acquiring (702) prediction graph information of key points of a target in the image sample based on the image features, the prediction graph information comprising a prediction location relationship graph of the key points and prediction location information of a central point in the key points;
constructing (703) a total loss function based on the prediction location relationship graph and the prediction location information; and
training (704) a key point detection model based on the total loss function.

9. The method according to claim 8, wherein the prediction location relationship graph is a prediction 3D location relationship graph, and the prediction location information comprises: a prediction 2D heat map and prediction depth information; the constructing a total loss function based on the prediction location relationship graph and the prediction location information comprises:
constructing a first loss function based on the prediction 3D location relationship graph and a real 3D location relationship graph of the target;
constructing a second loss function based on the prediction 2D heat map and a real 2D heat map of the central point;
constructing a third loss function based on the prediction depth information and real depth information of the central point; and
constructing the total loss function based on the first loss function, the second loss function and the third loss function.

10. The method according to claim 8 or 9, wherein the acquiring prediction graph information of key points of a target in the image based on the image features comprises:
enhancing the image features based on a number of location channels of the key points to obtain graph convolution enhancement features; and
obtaining the prediction graph information based on the graph convolution enhancement features, preferably
wherein the enhancing the image features based on a number of location channels of the key points to obtain graph convolution enhancement features comprises:
weighting the image features to obtain weighted image features;
determining a projection matrix from an image channel domain of the image features to a location channel domain of the key points based on the number of the location channels of the key points;
based on the projection matrix, projecting the weighted image features to the location channel domain to obtain aggregation features of the location channels of the key points;
obtaining location features of the location channels of the key points based on the aggregation features;
based on a transpose matrix of the projection matrix, back projecting the location features to the image channel domain to obtain fusion features; and
obtaining the graph convolution enhancement features based on the image features and the fusion features.

11. An apparatus (1000) of key point detection, comprising:
a feature extracting module (1001) configured to extract features of an image to obtain image features of the image;
a graph information extracting module (1002) configured to acquire graph information of key points of a target in the image based on the image features, the graph information comprising a location relationship graph of the key points and location information of a central point in the key points; and
a determining module (1003) configured to acquire location information of non-central points in the key points based on the location relationship graph of the key points and the location information of the central point.

12. An apparatus (1100) for training a key-point-graph-information extraction model, comprising:
a feature extracting module (1101) configured to extract features of an image sample to obtain image features of the image sample;
a graph information extracting module (1102) configured to acquire prediction graph information of key points of a target in the image sample based on the image features, the prediction graph information comprising a prediction location relationship graph of the key points and prediction location information of a central point in the key points;
a constructing module (1103) configured to construct a total loss function based on the prediction location relationship graph and the prediction location information; and
a training module (1104) configured to train a key point detection model based on the total loss function.

13. An electronic device, comprising:
at least one processor; and
a memory connected with the at least one processor communicatively;
wherein the memory stores instructions executable by the at least one processor which, when executed by the at least one processor, cause the at least one processor to perform the method according to any one of claims 1 to 10.

14. A non-transitory computer readable storage medium storing computer instructions which, when executed by a computer, cause the computer to perform the method according to any one of claims 1 to 10.

15. A computer program product comprising a computer program which, when executed by a processor, implements the method according to any one of claims 1 to 10.
